# EUROPEAN PATENT SPECIFICATION

(11) **EP 3 966 545 B1**
(45) Date of publication and mention of the grant of the patent: **17.04.2024**
(21) Application number: 20801641.0
(22) Date of filing: 04.05.2020
(51) Int. Cl.: G01N 1/44, G01N 1/00, B01L 7/00, B01L 9/00, G01N 23/22, G01N 23/2204

(54) **HOLDING DEVICE FOR A SAMPLE AND A SYSTEM FOR HEATING A SAMPLE USING SUCH A HOLDING DEVICE**
HALTEVORRICHTUNG FÜR EINE PROBE UND SYSTEM ZUM ERWÄRMEN EINER PROBE MIT EINER SOLCHEN HALTEVORRICHTUNG
DISPOSITIF DE SUPPORT POUR ÉCHANTILLON ET SYSTÈME DE CHAUFFAGE D'UN ÉCHANTILLON À L'AIDE D'UN TEL DISPOSITIF DE SUPPORT

(30) Priority: 07.05.2019 SE 1950544
(43) Date of publication of application: 16.03.2022
(73) Proprietor: Scienta Omicron AB, 750 15 Uppsala (SE)
(72) Inventor: AMANN, Peter, 184 94 Åkersberga (SE); NILSSON, Anders, 117 57 Stockholm (SE)
(74) Representative: Zacco Sweden AB
(86) International application number: PCT/SE2020/050446
(87) International publication number: WO 2020/226552

(56) References cited:
- WO-A1-2018/217953
- JP-A- S63 314 445
- JP-A- 2004 317 465
- US-A- 5 407 119
- US-A1- 2007 274 368
- US-A1- 2012 025 103
- US-A1- 2018 143 118
- GIERSTER, L. et al.: "A sample holder with integrated laser optics for an ELMITEC photoemission electron microscope", The Review of scientific instruments, vol. 86, no. 2, 2015, XP012194480,
- FUJIMOTO EIJI et al.: "Development of a new laser heating system for thin film growth by chemical vapor deposition", REVIEW OF SCIENTIFIC INSTRUMENTS, vol. 83, no. 9, 2012, page 94701, XP012162643, ISSN: 0034-6748, DOI: 10.1063/1.4748126

## Description

### TECHNICAL FIELD

The present invention relates to a device for holding and heating a sample, the surface of which is to be examined with a photoelectron spectroscopy instrument. The device may be used to prepare the sample before examining the sample using photoelectron spectroscopy and to hold the sample during performance of photoelectron spectroscopy.

### BACKGROUND ART

Sample heating is an important method for many applications such as, e.g., sample preparation. The sample preparation includes preparation/cleaning of the surface of the sample and providing of a desired crystal structure. Another field in which sample heating is important is Photoemission Spectroscopy (PES), in which the sample is irradiated to provide photoelectrons or electrons originating from so-called Auger processes. The photoelectrons are collected in an, e.g., magnetic or electrostatic lens system which focuses the electrons to an entrance to a measurement region.

For many measurements it is necessary to heat the sample to mimic the environment in which the material of the sample is utilized. An example of this is the active surface in a catalytic converter in a car. During use the active surface is in an environment with a high temperature and a high pressure.

In the prior art sample heaters, the samples have been heated using, e.g., button heaters or laser heaters. The problem with button heaters is that they must be hotter than the sample that is to be heated. This may create problems with unwanted heating of equipment surrounding the sample. Also, generating high temperatures in ultra-high vacuum (UHV) applications is always a compromise between the requirements of the process and the available heat sources suitable for these temperature and process conditions. For conventional heaters, such as, e.g., button heaters, the individual vapour pressures of the component materials of the heater add up and generate a partial pressure that could limit the achievable UHV conditions and deteriorate process quality. This problem even increases with temperature and with the demand for oxidation resistance of the heater material. In addition, the heat capacity of the heater assembly limits the heating/cooling rates. Also, button heaters possibly generate disturbing electric or magnetic fields An alternative to button heaters is laser heaters. Heating using laser light requires a high power laser. A problem with laser heaters according to the prior art is that they require shielding of light so that persons operating the device are not exposed to the strong laser light, as the required high power of the heating laser makes the light potentially harmful for the users, particularly for their eyes. Alternatively, protective eyewear could be used by the personnel operating the laser heater.

GIERSTER, L. et al.: "A sample holder with integrated laser optics for an ELMITEC photoemission electron microscope",The Review of scientific instruments, vol. 86, no. 2, 2015, XP012194480, discloses a laser heater for heating the backside of the sample which is arranged in a container.

### SUMMARY OF THE INVENTION

An object of the present invention is to provide a device for holding a sample which enables heating of the sample using a laser and with which at least one of the drawbacks of the holding devices of the prior art are at least alleviated.

Another object of the present invention is to provide a device for holding a sample which enables heating of the sample using a laser, and with which the need for protective eye-wear during heating using a laser is eliminated.

A further object of the present invention is to provide a device for holding a sample which enables heating of the sample using a laser, and which is better suited for use in a chamber for high vacuum even when the sample is heated to high temperatures.

At least one of the objects is fulfilled with a holding device according to the independent claim.

Further advantages are provided with the features of the dependent claims.

According to a first aspect of the invention a holding device for a sample is provided, which sample has a sample surface and a back surface. The holding device comprises a container with an interior chamber, and a sample holder arranged on the container, wherein the sample holder is adapted for attachment of the sample. The holding device also comprises a heating area, which is thermally connected to the sample surface when a sample is attached to the sample holder, and a fiber attachment means on the container for attachment of an optical fiber, wherein the holding device is configured such that, light from an optical fiber attached to the fiber attachment means is transferred through the interior chamber to the heating area. The holding device is characterized in that the holding device comprises a reflector with a reflective surface, wherein the reflector is arranged in the interior chamber. The holding device the fiber attachment means and the reflector are arranged such that, when light is emitted from the optical fiber and a sample is attached to the sample holder, a majority of the light reflected from the heating area is reflected towards the reflective surface of the reflector. The holding device is configured such that, when the sample is arranged in the sample holder, the sample surface is directed away from the container. The holding device according to the first aspect is favourable for many different applications such as, e.g., where a sample is heated. The holding device may be configured for a heating system. One example is when the holding device is used for a heating system for sample preparation. The sample preparation may include preparation/cleaning of the surface of the sample and providing a desired crystal structure. In order to avoid undesirable contaminants during the sample preparation it is desirable to perform the heating of the sample in vacuum. If the holding device is heated during heating of the sample there is a risk for gassing of contaminants from the holding device. In order to minimize such contaminants from gassing from the holding device it is desirable to keep the temperature of the holding device as low as possible. This is achieved with the reflector. Even if most of the light from the optical fiber is absorbed in the back surface of the sample some light will still be reflected. According to the invention most of the light reflected from the heating area is reflected towards the reflector and most of this light will eventually be reflected to the back surface of the sample. Thus, the holding device according to the invention minimizes the amount of light that hits the container. Thus, the heating of the container and the holding device will be minimized. Another advantage of the holding device according to the first aspect is that it may be made light tight. In this way it is enabled that operators of a laser heated heating system comprising the holding device, can dispense with protective eye-wear.

According to a generalisation of the first aspect a holding device for a sample is provided, which sample has a sample surface and a back surface. The holding device comprises a container with an interior chamber, and a sample holder arranged on the container, wherein the sample holder is adapted for attachment of the sample. The holding device also comprises a heating area, which is thermally connected to the sample surface when a sample is attached to the sample holder, and a fiber attachment means on the container for attachment of an optical fiber, wherein the holding device is configured such that, light from an optical fiber attached to the fiber attachment means is transferred through the interior chamber to the heating area. The holding device is characterized in that the holding device comprises a reflector arranged in the interior chamber. The holding device the fiber attachment means and the reflector are arranged such that, when light is emitted from the optical fiber and a sample is attached to the sample holder, a majority of the light reflected from the heating area is reflected towards the reflective surface of the reflector.

The solid angle of the light from the optical fiber is defined by the numerical aperture (NA) of the optical fiber. An example of a numerical aperture NA for a commercially available optical fiber is 0.22 leading to an emission angle of approximately 12.6 degrees. In case such an optical fiber is positioned with its end 20-30 mm away from the heating area one can illuminate an area of diameter 4-6mm. The reflector is to be placed in the 20-30 mm space between the heating area and the end of the optical fiber. In case the heating area is filled with a smooth mirror like surface the light will be reflected into a solid angle which corresponds to the solid angle of the light from the laser, which is incident on the heating area. For the case of a perfect mirror, the minimum angle of reflection is defined by the NA which is 12.6 degrees in the above example. This corresponds to 0.0386 steradians. This is the minimum expected emission angle.

When a sample is attached to the sample holder and light is emitted from the optical fiber light will be reflected from the heating area. The light may be considered to always be reflected into 2π steradians. The angular intensity distribution is, however, strongly dependent on the material surface. For the extreme case of a mirror like surface in the heating area, the angular distribution becomes very narrow and most of the reflected light is reflected in the same angle as the incident light. For the other extreme case of a rough surface such as, e.g., a nanostructured surface, or a carbon coated surface, the angular distribution of reflected intensity becomes large.

In order for a majority of the light reflected from the heating area to be reflected towards the reflector the solid angle of the reflective surface seen from the heating area may be at least 0.04 steradians to cover the case with a mirror like surface in the heating area. For such a small reflective surface to work it has to be placed very accurately at the position of the back reflection from the heating area, which is not very practical. In order to facilitate the positioning of the reflective surface the solid angle of the reflective surface seen from the heating area may be at least 0.5 steradians or preferable at least 1 steradian. Such a size of the reflective surface facilitates the positioning of the reflective surface. In the other extreme case of a rough surface such as, e.g., a nanostructured surface, or a carbon coated surface, which may be used in order to maximize the absorption, the reflected light has an even distribution over 2π steradians. The solid angle of the reflective surface seen from the heating area may be larger than π steradians assuming that the light reflected from the heating area is emitted with a more even distribution into a half sphere, i.e., into 2π steradians. As the solid angle of the reflective surface seen from the heating area may vary for different points of the heating area the defined angles should be considered as the average solid angle seen from the different points of the heating area.The reflector helps reducing the required power from the laser as the reflector increases the amount of light that is used for heating.

In theory it would be advantageous if all light incident on the heating area were to be absorbed. This is, however, not achievable. Thus, as some light will always be reflected, one object of the invention is to minimize the heating of the holding device.

The shape of the reflector may be optimized to reflect as much light as possible back to the sample surface. A preferred shape would be to have the reflector as a retro-reflector.

The holding device may comprise a sample aperture to the interior chamber, which is to be covered light-tightly by the sample, wherein the heating area is defined by the sample aperture. By having the sample covering the sample aperture light tightly it is not necessary to use protective eye-wear during operation. By having such a sample aperture the light from a light emitting optical fiber attached to the fiber attachment means hits directly on the back surface of the sample. This maximizes the efficiency of the heating. By the sample covering the sample aperture light tightly is meant that the sample aperture is not penetrable by light. By having the sample covering the sample aperture light-tightly it is avoided that light leaks out from the holding device during operation. In this case the heating area is the sample aperture. When a sample arranged in the sample holder the back surface of the sample is in the heating area. In the case with a sample aperture the heating area is constituted by the aperture when no sample is arranged in the sample holder. When a sample is arranged in the sample holder the heating area is covered by the back surface of the sample.

Heating area is an area in which heating is effected. No heating takes place without a surface, such as, e.g., the back surface of the sample, which the light from the fiber may hit.

When the holding device comprises a sample aperture it is advantageous that the holding device comprises an interlock system configured to detect whether a sample covers the sample aperture light tightly, i.e., that the sample covers the sample aperture such that the sample aperture is not penetrable by light. By having such an interlock system it is possible to arrange a heating system comprising a laser such that operation of the laser is disabled when no sample covers the sample aperture light tightly. Thus, the system can be made safe to operate without risk for any operator of the system even if the operator forgets to put a sample in place in the sample holder.

Depending on the absorption in the back surface of the sample as a function of wavelength and the wavelength of the light from the laser it might be advantageous to frequency double the light from the laser. If the absorption in the back surface is higher for the frequency doubled light it is favourable to perform frequency doubling. Frequency doubling may be achieved by arranging a frequency doubling crystal between the reflector and the heating area. As an example the frequency doubling crystal may be arranged in the sample aperture. Some of the light from the laser will then be frequency doubled in the frequency doubling crystal. As the frequency doubling is dependent on peak power it is advantageous to use a pulsed laser in case frequency doubling is to be performed.

The holding device may comprise a heat transfer element light tightly attached to the container. Such a heat transfer element comprises a first surface directed towards the interior chamber and defining the heating area, and a second surface configured to be in contact with a sample arranged in the sample holder. By having such a heat transfer element there is no need for any interlock system as the holding device will be safe to operate irrespective of whether there is a sample in place or not. The efficiency of the heating will be slightly lower with a heat transfer element in place. Even if the second surface is configured to be in contact with the sample the heat transfer will work also with a small gap between the second surface and the sample.

With regard to the sample, it must be made of a solid material when the holding device comprises a sample aperture. However, when the holding device comprises a heat transfer element, the sample may be liquid and be arranged as a film on the second surface of the heat transfer element.

When the holding device comprises a heat transfer element, a heat insulation region may be arranged between the heat transfer element and the container. By having such a heat insulation region, the heat transfer from the heat transfer element to the container may be minimized.

The heat insulation region may be made of a metal oxide, such as, e.g., aluminium oxide, which is a good heat insulator.

As mentioned above it is desirable to maximize the amount of light that is absorbed by the sample. In the case of the holding device comprising a heat transfer element this is equivalent to maximizing the amount of light absorbed by the heat transfer element and maximizing the amount of energy transferred from the heat transfer element to the sample. The light absorption of the heat transfer element may be improved by covering the first surface of the heat transfer element with a suitable material with good light absorption. By covering the first surface of the heat transfer element with a material, such as titanium dioxide or graphite, the light absorption will be high. Titanium dioxide is also heat resistant.

As an alternative or in addition to a light absorbing material, the first surface may be covered by a frequency doubling material. This is useful especially when the laser emits light at infrared wavelengths which are not efficiently absorbed in the first surface.

The holding device may be configured such that, when light is emitted from an optical fiber attached to the fiber attachment means, essentially the entire heating area is illuminated. Such an arrangement is favourable as it will lead to an even heating and more even heat distribution of the sample.

The fiber attachment means may be arranged opposite to the heating area, so that light emitted from the optical fiber is directed directly towards the heating area. This enables a simple design of the holding device. The holding device may be constructed such that the distance from an optical fiber to the sample allows light from the optical fiber to illuminate the entire heating area without any intermediate optical elements, such as a lens. Thus, the distance is adapted to the size of the heating area and the numerical aperture of the optical fiber.

The fiber attachment means may be arranged slightly angled in relation to the heating area, such that light from the optical fiber that is reflected from the heating area hits on the side of the optical fiber. In reality this means that the light hits the heating area in an angle that is larger than the angle defined by the emission cone of the light. This may be favourable in order to minimize the risk for any light from the sample to be reflected back into the optical fiber. Such light reflected back into the optical fiber may damage the laser. This is mainly a problem if the surface is smooth and reflective. Thus, if the surface is matt, the light will be reflected into a different angles and possibly into a solid angle of 2π steradians. In case the light is reflected into a solid angle of 2π steradians the above problem will not be an issue.

An optical element, such as a reflector and/or a lens, is arranged in the interior chamber between the fiber attachment means and the sample holder. By including such an optical element in the holding device, the design of the holding device may be made more freely.

At least a part of the container may be made of tantalum, molybdenum, titanium or copper. These materials are especially suitable when the holding device is placed with the sample in front of a an instrument such as, e.g., a photoemission spectroscopy instrument or a low energy electron diffraction instrument. These materials are suitable in such an application as they are non-magnetic.

The container may comprise a length axis and a mechanical attachment means for attachment of the holding device, wherein the fiber attachment means is arranged at a distance along the length axis from the sample holder, and wherein the mechanical attachment means is arranged within a first distance from the sample holder being no more than 10 %, preferably no more than 5 %, of a second distance from the sample holder to the fiber attachment means. As mentioned above, the container may be heated to some degree despite the reflector. The heating of the container will lead to some heat expansion of the container. However, due to the above described position of the mechanical attachment means, the position of the sample surface Ss will be effected only to a small amount by the heat expansion. This is important for applications of the holding device 2 with the sample close to, e.g., an analyser instrument. An example of such an application is when the holding device is used in a heating system for APPES. In APPES the sample surface is arranged very close to the aperture of an analyser instrument. Thus, it is important that the sample surface does not move to much during heating of the sample.

The container may comprise a main surface on which the sample is to be arranged, wherein the mechanical attachment means is arranged on the main surface. Such an arrangement would enable a small distance between the sample surface and the mechanical attachment means.

The sample holder and the mechanical attachment means may be made integral and/or arranged in a unitary piece of material. This is favourable to enable a small distance between the sample surface and the mechanical attachment means.

The reflector may comprise a a reflector base on which the reflective surface is configured,. The reflective surface may be provided by configuring the surface of the reflector base to be reflective by polishing the surface, or by providing a reflective layer on the reflector base. The reflective layer may be, e.g., a gold layer, an aluminium layer, or another material that matches well with the wavelength of the laserlight. By having the reflector base as a separate element from the container the heat transfer from the reflective surface to the container may be minimized.

The reflector base may be made from sheet metal. Sheet metal is advantageous in that it may easily be formed into the desired shape. The reflector base may be formed from a plurality of pieces of sheet metal.

The reflector base may be arranged with a gap between the reflector base and the container. The gap may be provided in many different ways.The reflector base may comprise perforations which have been manufactured by pressing out tabs from the sheet metal of the reflector base, wherein the tabs extend from the reflector base and when in operation provide the gap between the reflector base and the container, to thereby minimize heat transfer from the reflector to the container. This is a simple way of providing a gap between the reflector and the container. The reflector is in this case in the form of a sheet metal plate with one reflective surface. The tabs may be punched in the sheet metal plate with the sheet metal plate flat. The sheet metal plate may then be rolled with the reflective surface on the inside. End pieces may be added on both sides of the rolled sheet metal plate. The end pieces are preferably also made from sheet metal.

According to a second aspect of the present invention a heating system is provided for heating a sample. The heating system comprises a holding device according to the first aspect and may include any of the features mentioned in connection with the first aspect of the invention. The heating system also comprises a laser, an optical fiber attached with one end to the fiber attachment means, and with the other end of the optical fiber to the laser.

Such a heating system is advantageous in that the laser is placed at a distance from the sample and heats the holding device to a smaller extent than the button heaters of the prior art.

In the following preferred embodiments of the invention will be described with reference to the appended drawings.

### BRIEF DESCRIPTION OF THE DRAWINGS

Fig. 1 shows schematically a heating system for heating a sample comprising a holding device, according to an embodiment of the present invention, for holding the sample.
Fig. 2 shows in a perspective view a holding device for a sample, which holding device is configured for a heating system such as that shown in Fig. 1.
Fig. 3 shows in cross section the holding device in Fig. 2.
Fig. 4 shows in cross section the holding device in Fig. 2 according to an alternative embodiment.
Fig. 5 shows schematically the interlock system of Fig. 1.
Fig. 6 shows schematically a holding device according to another embodiment.

### DETAILED DESCRIPTION

In the following detailed description of the invention the same reference numeral will be used for the same feature in the different figures. The drawings are not drawn to scale.

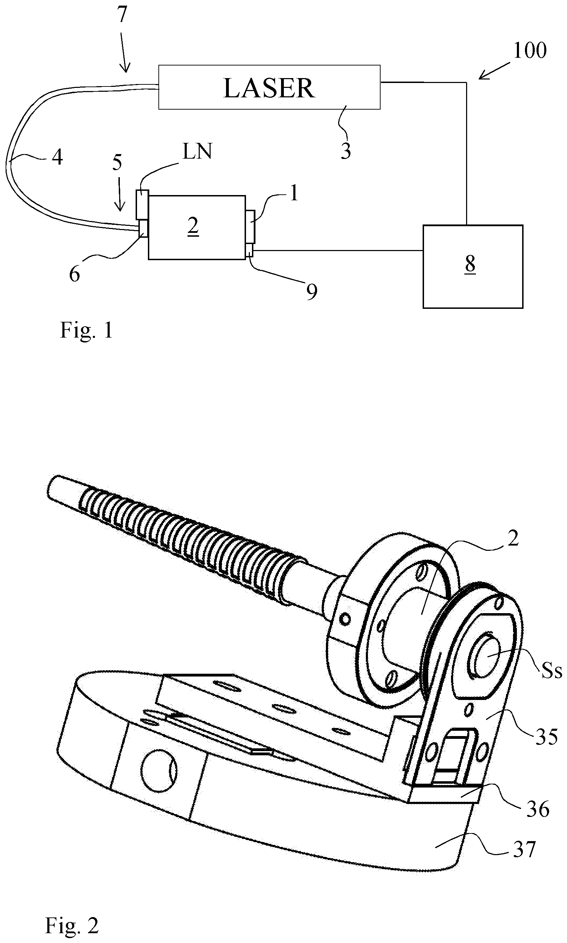

Fig. 1 shows schematically a heating system 100 for heating a sample 1 comprising a holding device 2, according to an embodiment of the present invention, for holding the sample 1. A heating system for heating the sample 1. The heating system comprises a holding device on which the sample 1 is hold. The system 100 further comprises a laser 3, and an optical fiber 4 attached with one end 5 to fiber attachment means 6 on the holding device 2, and with the other end 7 of the optical fiber 4 to the laser 3. The fiber attachment means 6 enables light tight connection of an optical fiber 4. The laser 3 is controlled by a drive unit 8. The system 100 also comprises an interlock device 9 connected to the drive unit 8. When a sampled 1 is in place in the interlock device 9 is activated and enables the drive unit 8 to operate the laser 3. When the sample is removed the interlock device 9 is deactivated and disables the drive unit 8 to operate the laser 3. The laser is chosen to give high continuous power. A diode pumped ND:YAG lasers may be a suitable choice for the laser 3. Since the laser is used just for heating the quality of the light is of low importance. The laser can be a single-mode, or multimode laser and can be continuous or non-continuous. The only important feature of the laser is power at a wavelength that is well absorbed by the sample. Thus, the wavelength of the laser 3 may be chosen to maximize absorption in the heating area 13.

To avoid excessive heating of the optical fiber 4 it is preferably cooled by, e.g., liquid nitrogen from a liquid nitrogen source LN.

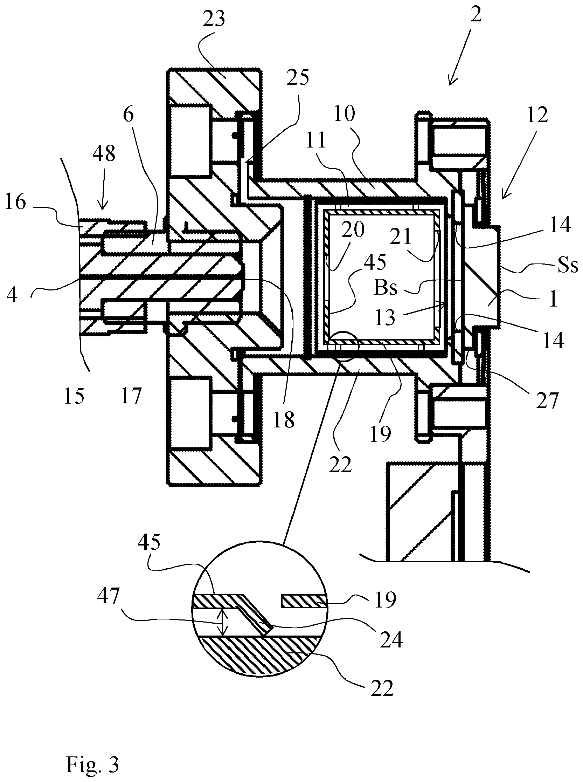

Fig. 2 shows in a perspective view a holding device 2 for a sample 1, having a sample surface Ss and a back surface Bs (Fig. 3), the holding device being configured for a heating system such as that shown in Fig. 1. Fig. 3 shows in cross section the holding device 2 in Fig. 2. The holding device 2 comprises a container 10 with an interior chamber 11. A sample holder 12 is arranged on the container 10. The sample holder 12 is adapted for attachment of the sample 1. The holding device comprises a heating area 13, which is thermally connected to the sample surface Ss when a sample 1 is attached to the sample holder 12. In Fig. 3 the holding device 2 comprises a sample aperture to the interior chamber. The sample aperture is delimited by the aperture edge 14. The sample aperture is to be covered light-tightly by the sample 1. The heating area is defined by the sample aperture 14, i.e., by the aperture edge 14. Thus, when a sample 1 is arranged in the sample holder 12 the heating area 13 is covered by the back surface Bs of the sample 1. The holding device also comprises a fiber attachment means 6 on the container for attachment of an optical fiber 4. In Fig. 3 the first end 5 of the optical fiber is attached to an end attachment means 48. When the optical fiber 4 is attached to the fiber attachment means 6 it is done by attaching the end attachment means 48 to the fiber attachment means 6. In the embodiment shown in Fig. 3 the end attachment means 14 comprises a centre piece 15 to which the optical fiber 4 is glued and a nut 16 which is arranged to be screwed onto the fiber attachment means 6. When the nut 16 is screwed onto the fiber attachment means 6 the centre piece 15 is pressed onto the flange 17 on the fiber attachment means 6. The end surface 18 of the optical fiber 4 is directed towards the back surface Bs on the sample 1. Thus, light from the optical fiber attached to the fiber attachment means 6 is transferred through the interior chamber 11 to the heating area 13.

In the embodiment of Fig. 3, the holding device 2 is made from a circularly symmetrical tube part 22 and a back part 23. An ventilation channel 25 is provided between the back part 23 and the tube part 22. In the end of the holding device is a main surface 26 on which the sample 1 is to be arranged. The main surface 26 comprises a recess 27 in which the sample 1 is to be arranged.

The holding device 2 comprises a reflector 19, with a reflective surface 45, arranged in the interior chamber 11. The holding device, the fiber attachment means and the reflector are arranged such that, when light is emitted from the laser 3 (see Fig. 1) and a sample 1 is attached to the sample holder 12, a majority of the light reflected from the heating area 13, i.e., the back surface Bs of the sample 1, is reflected towards the reflective surface 45 of the reflector 19. The light is reflected into a solid angle which is dependent on the structure of the back surfaceBs of the sample 1. In case the back surface is matt the light is reflected into a solid angle of 2π. In this case the reflective surface should have a solid angle of π steradians seen from the heating area. However, if the back surface is not very matt but smooth the light will be reflected into a smaller solid angle than 2π steradians. In this case the reflector could have a smaller solid angle than 2π steradians as seen from the heating area. In case the surface is mirror-like, as a polished surface, the light will be reflected into a solid angle which is the same as the solid angle of the incoming light. The reflector 19 comprises an entrance aperture 20 allowing light to enter into the reflector 19 and an exit aperture 21 allowing light to exit from the reflector. The reflective surface 45 is on the inside of the reflector and preferable covers the entire inside of the reflector 19. The entrance aperture 20 and the exit aperture are arranged such that, during operation of the laser, a majority of the light from the optical fiber reaches the heating area 13. Preferably, at least 99%, and most preferred at least 99.9% of the light from the optical fiber passes through the entrance aperture 20 and the exit aperture 21. To achieve this in the embodiment of Fig. 3 the size of the entrance aperture 20, the distance between the end surface 18 of the optical fiber and the entrance aperture 20, the size of the exit aperture 21 and the distance between the exit aperture 21 and the back surface Bs are adapted to the numerical aperture of the optical fiber 4. The distance between the end surface 18 of the optical fiber 4 and the Bs and the size of the heating area 13 are also adapted to the numerical aperture of the optical fiber such that essentially the entire heating area 13 is illuminated by light from the optical fiber 4.

Most of the light that is reflected towards the reflective surface 45 of the reflector 19 is in turn reflected from the reflector 19 and will eventually hit the heating area 13 again. It is desirable to have a high absorption of the laser light on the back surface Bs of the sample 1. This may be achieved by applying a layer of highly absorbing and heat resistant material, such as, e.g., titanium dioxide on the back surface Bs of the sample 1. However, even with a layer of highly absorbing material on the back surface Bs of the sample 1 some light will be reflected from the back surface and will hit the reflective surface 45 of the reflector 19 again. A small portion of the reflected light might be reflected towards the entrance aperture 20. In order to avoid the reflected light from the back surface Bs to hit directly onto the end surface 18 of the optical fiber it is advantageous to have a small angle between the end surface 18 of the optical fiber and the back surface of the back surface Bs. Even if the reflective surface 45 of the reflector 19 might be made with a very high reflectance some of the light will be absorbed by the reflector 19. In order to avoid heating of the holding device the reflector 19 is arranged at a distance from the tube part 22. As can be seen in Fig. 3 the reflector base 46 is arranged with a gap 47 between the reflector base 46 and the container 10. This minimizes the transfer of heat from the reflector base 46 to the container. The reflector base 46 ccan be made from sheet metal. The gap 47 may be achieved by punching out tabs 24 from the reflector 19 as is shown in the partial enlargement in Fig. 3. As shown in Fig. 3 the reflector base 46 comprises perforations which have been manufactured by pressing out tabs 24 from the sheet metal of the reflector base 46, wherein the tabs 24 extend from the reflector base 19 and provides the gap 47 between the reflector base 46 and the container 10. The tabs 24 extend a about one millimetre and provide a small gap between the reflector 19 and the tube part 22. The material in the container 10 is chosen from tantalum, molybdenum, titanium or copper. These materials have in common that they are non-magnetic, which is important for soft X-ray XPS. For hard X-ray applications one may relax the demand for a non-magnetic material in the container 10. In the partial enlargement in Fig. 3 the tabs 24 and the gap 47 created by the tabs 24 are shown more clearly.

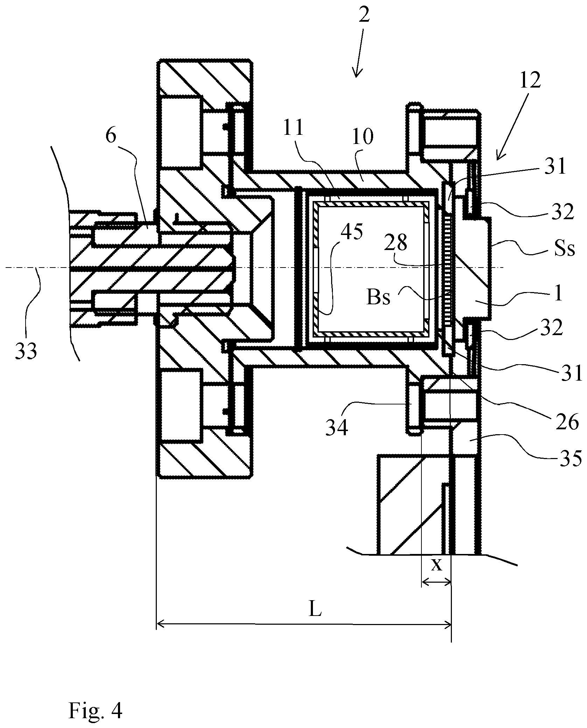

Fig. 4 shows the holding device 2 according to an alternative embodiment of the invention. Only the differences between the holding device in Fig. 4 and the holding device in Fig. 3 will be described. The holding device 2 comprises a heat transfer element 28 light tightly attached to the container. The heat transfer element 28 comprises a first surface 29 directed towards the interior chamber 11 and defining the heating area 13, and a second surface 30 being in contact with the sample 1 when a sample 1 is arranged in the sample holder 12. A heat insulation region 31 is arranged between the heat transfer element 28 and the container 10. The heat transfer element 28 makes the container closed even when no sample 1 is in place in the sample holder 12. The material in the heat transfer element 28 should have a high heat conductivity, absorb as much light as possible and transfer it to the sample side. Examples on suitable materials are, tantalum, molybdenum and titanium . Also other metals with high melting point could be used as material for the heat transfer element 28. The heat insulation on the other hand should have low heat conductivity. The heat insulation region could be made of a metal oxide, such as, e.g., aluminium oxide or mica. In correspondence to the embodiment of Fig. 3 it is important to provide high absorption of the heating area 13. In the embodiment of Fig. 4 case the heating area is on the first surface 29 of the heat transfer element 28. To provide high heat absorption of the first surface 29 of the heat transfer element 28, it is covered by titanium dioxide.

The following features are also present in the embodiment of Fig. 3 but are not described for Fig. 3 in order to keep the number of reference numerals reasonable. The holding device 2 comprises spring arms 32 arranged on the main surface 26, which spring arms 32 holds the sample 1 in position. The container 10 comprises a length axis 33 and mechanical attachment means 34. The fiber attachment means 6 is arranged at a distance along the length axis 33 from the sample holder 12, and the mechanical attachment means 34 is arranged within a first distance x from the sample holder 12 being no more than 10 %, preferably no more than 5 %, of a second distance L from the sample holder to the fiber attachment means 6. It would be optimal to have the first distance x equal to zero. In Fig. 4 the mechanical attachment means 34 is a screw hole 34 into the main surface 26. A holder 35, which is most clearly seen in Fig. 2, is attached to the holding device 2. In Fig. 2 it is also shown how the holder 35 is attached to a block 36 which in turn is attached to a movement device 37. As mentioned above the container may be heated to some degree despite the reflector 19. The heating of the container will lead to some heat expansion of the container 10. However, due to the position of the mechanical attachment means 34 the majority of the heat expansion will be on the part of the container 10 to the left of the mechanical attachment means 34 in Fig. 3. Thus, the position of the sample surface Ss will be effected only to a small amount by the heat expansion. This is important for applications of the holding device 2 with the sample close to, e.g., an analysation instrument. An example of such an application is when the holding device is used in a heating system 100 for APPES. In APPES the sample surface Ss is arranged very close to the aperture of an analyser apparatus. Thus, it is important that the sample surface Ss does not move to much during heating of the sample.

With reference to Fig. 1 primarily, during operation light from the laser 3 is transferred through the optical fibre 4 into the interior chamber 11 of the container 10. Light will be absorbed in the heating area 13 (see Fig. 3) and the sample 1 will be heated. In order to control the temperature a thermocouple (not shown) may be arranged to measure the temperature of the sample 1. A temperature signal from the thermocouple may be connected to the drive unit 8, which may control the power output of the laser 3 using, e.g., a proportional-integral-derivative controller (PID-controller).

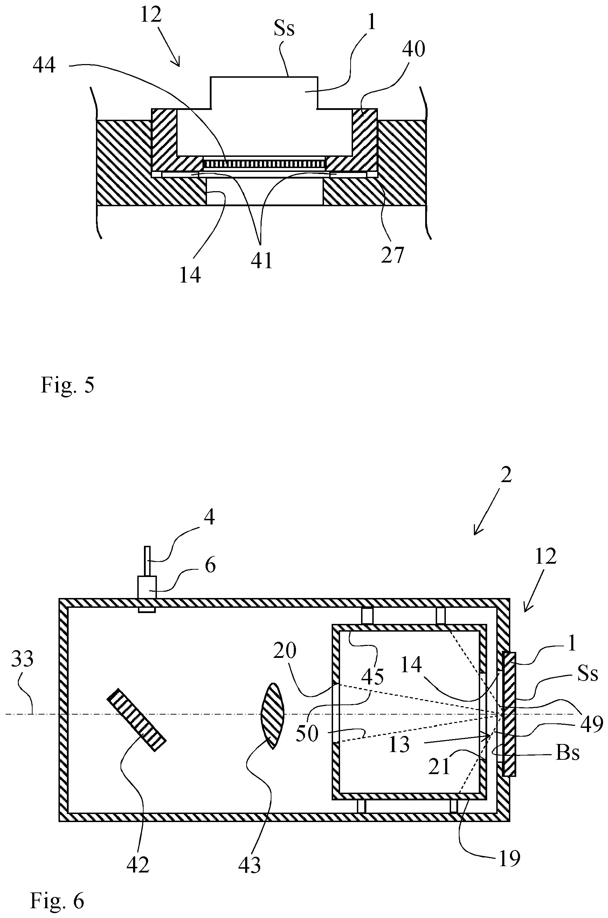

Fig. 5 shows schematically the interlock system 9 of Fig. 1. Fig. 5 shows the sample 1 arranged light tightly in a sample holder device 40 above the sample aperture 14. The sample holder 40 is made of metal. Electrical contacts 41 are arranged in the recess 27 in the sample holder 12. When the sample holder device 40 is in position the electrical contacts 41 are short circuited. This may trigger the drive unit 8 to start the laser 3. Arranged in the holder device 40 is a frequency doubling crystal 44. The frequency doubling crystal 44 frequency doubles a part of the light from the laser 3. This may improve the absorption in the sample if the frequency doubled light is absorbed more strongly in the back surface Bs of the sample 1. In order to maximize the frequency doubling it is advantageous to have a pulsed laser 3. The frequency doubling crystal 44 may of course, alternatively, be arranged in the sample aperture 14.

As an alternative to the electrical interlock described above it is of course also possible to have a fully mechanical interlock. The sample holder device 40 may be arranged to press away a mechanical block (not shown) when the sample holder device 40 slides in place. Thus, when the sample holder device is not in place all laser light hits the mechanical block.

A drawback with this solution is that a lot of laser energy has to be absorbed in the mechanical block.

Fig. 6 shows schematically a holding device 2 according to another embodiment. The holding device 2 comprises a container 10 with a fiber attachment means 6 to which an optical fiber 4 is attached. A sampled 1 is attached in the sample holder 12. Optical elements in the form of a mirror 42 and a lens 43 are arranged between the fiber attachment means 6 and the sample 1 holder 12. The light from the optical fiber 4 is emitted in an angle to the sample 1 and is reflected in the mirror 42 and focussed in the lens before hitting the heating area 13 on the back side Bs of the sample 1. This embodiment may be favourable in some cases, such as when there is limited space along the length axis 33 of the container.

In Fig. 6 it is also illustrated how the light reflected from the back surface Bs is reflected towards the reflective surface 45. The dashed lines 49 shows the marginal rays for the light reflected from the centre of the back surface Bs which enter through the exit aperture 21. The dashed lines 50 shows the marginal rays for the light reflected from the centre of the back surface Bs which just pass through the entrance aperture 20. The solid angle between the dashed lines 49 and the dashed lines 50 defines the solid angle of the reflective surface 45 seen from the centre of the back surface Bs. An average of the solid angle of the reflective surface 45 can be determined. Assuming that all points of the back surface reflects with an even distribution the average should be above π steradians for a majority of the reflected light to hit the reflective surface.

## Claims

1. A holding device (2) for a sample (1) to be examined using a photoemission spectroscopy technique, the sample having a sample surface (Ss) and a back surface (Bs), the holding device (2) comprising:
- a container (10) with an interior chamber (11),
- a sample holder (12) arranged on the container (10), the sample holder (12) being adapted for attachment of the sample (1),
- a heating area (13), which is thermally connected to the sample surface (Ss) when a sample (1) is attached to the sample holder (12),
- a fiber attachment means (6) on the container (10) for attachment of an optical fiber (4), wherein the holding device (2) is configured such that, light from an optical fiber (4) attached to the fiber attachment means (6) is transferred through the interior chamber (11) to the heating area (13),
**characterized in that** the holding device (2) comprises a reflector (19) arranged in the interior chamber (11),
wherein the holding device (2), the fiber attachment means (6) and the reflector (19) are arranged such that, when light is emitted from the optical fiber (4) and a sample (1) is attached to the sample holder (12), a majority of the light reflected from the heating area (13) is reflected towards a reflective surface (45) of the reflector (19).

2. The holding device (2) according to claim 1, wherein the holding device (2) is configured such that, when the sample (1) is arranged in the sample holder (12), the sample surface (Ss) is directed away from the container (10).

3. The holding device (2) according to claim 1 or 2, wherein the solid angle of the reflective surface (45) seen from the heating area is larger than 0.04 steradians, preferably larger than 0.5 steradians, more preferred larger than 1 steradian, and most preferred larger than π steradians.

4. The holding device (2) according to anyone of claims 1-3, comprising a sample aperture (14) to the interior chamber (11), which is to be covered light-tightly by the sample (1), wherein the heating area (13) is defined by the sample aperture (14).

5. The holding device (2) according to anyone of claims 1-3, comprising a heat transfer element (28) light-tightly attached to the container (10), the heat transfer element (28) comprising:
- a first surface (29) directed towards the interior chamber (11) and defining the heating area (13), and
- a second surface (30) configured to be in contact with a sample (1) arranged in the sample holder (12).

6. The holding device (2) according to anyone of the preceding claims, configured such that, when light is emitted from an optical fiber attached to the fiber attachment means (6), essentially the entire heating area (13) is illuminated.

7. The holding device (2) according to any one of the preceding claims, wherein the fiber attachment means (6) is arranged opposite to the heating area (13), so that light emitted from the optical fiber (4) is directed directly towards the heating area (13).

8. The holding device (2) according to any one of the preceding claims, wherein an optical element, such as a reflector (38) and/or a lens (39), is arranged in the interior chamber (11) between the fiber attachment means (6) and the sample holder (12).

9. The holding device (2) according to any one of the preceding claims, wherein the container (10) comprises a length axis (33) and a mechanical attachment means (34) for attachment of the sample holder (12), wherein the fiber attachment means (6) is arranged at a distance along the length axis (33) from the sample holder (12), and wherein the mechanical attachment means (34) is arranged within a first distance (x) from the sample holder (12) being no more than 10 %, preferably no more than 5 %, of a second distance (L) from the sample holder (12) to the fiber attachment means (6).

10. The holding device (2) according to claim 9, wherein the container (10) comprises a main surface (26) on which the sample (1) is to be arranged, wherein the mechanical attachment means (34) is arranged on the main surface (26).

11. The holding device (2) according to any one of the preceding claims, wherein the reflector comprises a reflector base (46) on which the reflective surface (45) is configured.

12. The holding device (2) according to claim 11, wherein the reflector base (46) is made from sheet metal.

13. The holding device (2) according to claim 11 or 12, wherein the reflector base (46) is arranged with a gap between the reflector base (46) and the container (10).

14. The holding device (2) according to claim 12 or 13, wherein the reflector base (46) comprises perforations which have been manufactured by pressing out tabs (24) from the sheet metal of the reflector base (46), wherein the tabs (24) extend from the reflector base (19) and provides the gap (47) between the reflector base (46) and the container (10).

15. A heating system (100) for heating a sample (1) comprising
- a holding device (2) according to any one of the preceding claims,
- a laser (3),
- an optical fiber (4) attached with one end (5) to the fiber attachment means (6), and with the other end (7) of the optical fiber (4) to the laser (3).

## Patentansprüche

1. Haltevorrichtung (2) für eine Probe (1), die unter Verwendung einer Photoemissionsspektroskopietechnik zu untersuchen ist, wobei die Probe eine Probenfläche (Ss) und eine Rückfläche (Bs) aufweist und die Haltevorrichtung (2) Folgendes umfasst:
- einen Behälter (10) mit einer Innenkammer (11),
- einen Probenhalter (12), der an dem Behälter (10) angeordnet ist, wobei der Probenhalter (12) zur Anbringung der Probe (1) angepasst ist,
- einen Erwärmungsbereich (13), der thermisch mit der Probenfläche (Ss) verbunden ist, wenn eine Probe (1) an dem Probenhalter (12) angebracht ist,
- ein Faseranbringungsmittel (6) an dem Behälter (10) zur Anbringung einer optischen Faser (4), wobei die Haltevorrichtung (2) derart konfiguriert ist, dass Licht aus einer optischen Faser (4), die an dem Faseranbringungsmittel (6) angebracht ist, durch die Innenkammer (11) zu dem Erwärmungsbereich (13) übertragen wird,
**dadurch gekennzeichnet, dass** die Haltevorrichtung (2) einen Reflektor (19) umfasst, der in der Innenkammer (11) angeordnet ist,
wobei die Haltevorrichtung (2), das Faseranbringungsmittel (6) und der Reflektor (19) derart angeordnet sind, dass, wenn Licht aus der optischen Faser (4) emittiert wird und eine Probe (1) an dem Probenhalter (12) angebracht ist, ein Großteil des von dem Erwärmungsbereich (13) reflektierten Lichts in Richtung einer reflektierenden Fläche (45) des Reflektors (19) reflektiert wird.

2. Haltevorrichtung (2) nach Anspruch 1, wobei die Haltevorrichtung (2) derart konfiguriert ist, dass, wenn die Probe (1) in dem Probenhalter (12) angeordnet ist, die Probenfläche (Ss) von dem Behälter (10) weg gerichtet ist.

3. Haltevorrichtung (2) nach Anspruch 1 oder 2, wobei der Raumwinkel der reflektierenden Fläche (45), betrachtet von dem Erwärmungsbereich, größer als 0,04 Steradiant, vorzugsweise größer als 0,5 Steradiant, stärker bevorzugt größer als 1 Steradiant und am stärksten bevorzugt größer als π Steradiant ist.

4. Haltevorrichtung (2) nach einem der Ansprüche 1-3, umfassend eine Probenöffnung (14) in die Innenkammer (11), die durch die Probe (1) lichtdicht abzudecken ist, wobei der Erwärmungsbereich (13) durch die Probenöffnung (14) definiert ist.

5. Haltevorrichtung (2) nach einem der Ansprüche 1-3, umfassend ein Wärmeübertragungselement (28), das lichtdicht an dem Behälter (10) angebracht ist, wobei das Wärmeübertragungselement (28) Folgendes umfasst:
- eine erste Fläche (29), die in Richtung der Innenkammer (11) gerichtet ist und den Erwärmungsbereich (13) definiert, und
- eine zweite Fläche (30), die dazu konfiguriert ist, in Kontakt mit einer Probe (1) zu stehen, die in dem Probenhalter (12) angeordnet ist.

6. Haltevorrichtung (2) nach einem der vorhergehenden Ansprüche, die derart konfiguriert ist, dass, wenn Licht aus einer optischen Faser, die an dem Faseranbringungsmittel (6) angebracht ist, emittiert wird, im Wesentlichen der gesamte Erwärmungsbereich (13) beleuchtet wird.

7. Haltevorrichtung (2) nach einem der vorhergehenden Ansprüche, wobei das Faseranbringungsmittel (6) gegenüber dem Erwärmungsbereich (13) angeordnet ist, sodass Licht, das aus der optischen Faser (4) emittiert wird, direkt in Richtung des Erwärmungsbereichs (13) gerichtet ist.

8. Haltevorrichtung (2) nach einem der vorhergehenden Ansprüche, wobei ein optisches Element, wie etwa ein Reflektor (38) und/oder eine Linse (39), in der Innenkammer (11) zwischen dem Faseranbringungselement (6) und dem Probenhalter (12) angeordnet ist.

9. Haltevorrichtung (2) nach einem der vorhergehenden Ansprüche, wobei der Behälter (10) eine Längsachse (33) und ein mechanisches Anbringungsmittel (34) zur Anbringung des Probenhalters (12) umfasst, wobei das Faseranbringungsmittel (6) in einem Abstand entlang der Längsachse (33) von dem Probenhalter (12) angeordnet ist und wobei das mechanische Anbringungsmittel (34) innerhalb eines ersten Abstands (x) von dem Probenhalter (12) angeordnet ist, der nicht mehr als 10 %, vorzugsweise nicht mehr als 5 % eines zweiten Abstands (L) von dem Probenhalter (12) zu dem Faseranbringungsmittel (6) beträgt.

10. Haltevorrichtung (2) nach Anspruch 9, wobei der Behälter (10) eine Hauptfläche (26) umfasst, an der die Probe (1) anzuordnen ist, wobei das mechanische Anbringungsmittel (34) an der Hauptfläche (26) anordnet ist.

11. Haltevorrichtung (2) nach einem der vorhergehenden Ansprüche, wobei der Reflektor einen Reflektorfuß (46) umfasst, an dem die reflektierende Fläche (45) konfiguriert wird.

12. Haltevorrichtung (2) nach Anspruch 11, wobei der Reflektorfuß (46) aus Metallblech hergestellt ist.

13. Haltevorrichtung (2) nach Anspruch 11 oder 12, wobei der Reflektorfuß (46) mit einer Lücke zwischen dem Reflektorfuß (46) und dem Behälter (10) angeordnet ist.

14. Haltevorrichtung (2) nach Anspruch 12 oder 13, wobei der Reflektorfuß (46) Perforationen umfasst, die durch Ausstanzen von Laschen (24) aus dem Metallblech des Reflektorfußes (46) gefertigt wurden, wobei sich die Laschen (24) von dem Reflektorfuß (19) erstrecken und die Lücke (47) zwischen dem Reflektorfuß (46) und dem Behälter (10) bereitstellen.

15. Erwärmungssystem (100) zum Erwärmen einer Probe (1), umfassend
- eine Haltevorrichtung (2) nach einem der vorhergehenden Ansprüche,
- einen Laser (3),
- eine optische Faser (4), die mit einem Ende (5) an das Faseranbringungsmittel (6) und mit dem anderen Ende (7) der optischen Faser (4) an dem Laser (3) angebracht ist.

## Revendications

1. Dispositif de support (2) pour un échantillon (1) à examiner à l'aide d'une technique de spectroscopie de photoémission, l'échantillon ayant une surface d'échantillon (Ss) et une surface arrière (Bs), le dispositif de support (2) comprenant :
- un récipient (10) avec une chambre intérieure (11),
- un porte-échantillon (12) disposé sur le récipient (10), le porte-échantillon (12) étant adapté pour la fixation de l'échantillon (1),
- une zone de chauffage (13) qui est reliée thermiquement à la surface d'échantillon (Ss) lorsqu'un échantillon (1) est fixé au porte-échantillon (12),
- un moyen de fixation de fibre (6) sur le récipient (10) pour la fixation d'une fibre optique (4), dans lequel le dispositif de support (2) est configuré de telle sorte que la lumière provenant d'une fibre optique (4) fixée au moyen de fixation de fibre (6) est transféré à travers la chambre intérieure (11) jusqu'à la zone de chauffage (13),
**caractérisé en ce que** le dispositif de support (2) comprend un réflecteur (19) disposé dans la chambre intérieure (11),
dans lequel le dispositif de support (2), le moyen de fixation de fibre (6) et le réflecteur (19) sont disposés de telle sorte que, lorsque la lumière est émise par la fibre optique (4) et qu'un échantillon (1) est fixé au porte-échantillon (12), une majorité de la lumière réfléchie depuis la zone de chauffage (13) est réfléchie vers une surface réfléchissante (45) du réflecteur (19).

2. Dispositif de support (2) selon la revendication 1, dans lequel le dispositif de support (2) est configuré de telle sorte que, lorsque l'échantillon (1) est disposé dans le porte-échantillon (12), la surface d'échantillon (Ss) est dirigée à l'opposé du récipient (10).

3. Dispositif de support (2) selon la revendication 1 ou 2, dans lequel l'angle solide de la surface réfléchissante (45) vu depuis la zone de chauffage est supérieur à 0,04 stéradian, de préférence supérieur à 0,5 stéradian, de préférence supérieur à 1 stéradian, et le plus préféré supérieur à π stéradians.

4. Dispositif de support (2) selon l'une quelconque des revendications 1 à 3, comprenant une ouverture d'échantillon (14) vers la chambre intérieure (11), qui doit être recouverte de manière étanche à la lumière par l'échantillon (1), dans lequel la zone de chauffage (13) est définie par l'ouverture d'échantillon (14).

5. Dispositif de support (2) selon l'une quelconque des revendications 1 à 3, comprenant un élément de transfert de chaleur (28) fixé de manière étanche à la lumière au récipient (10), l'élément de transfert de chaleur (28) comprenant :
- une première surface (29) dirigée vers la chambre intérieure (11) et définissant la zone de chauffage (13), et
- une seconde surface (30) configurée pour être en contact avec un échantillon (1) disposé dans le porte-échantillon (12) .

6. Dispositif de support (2) selon l'une quelconque des revendications précédentes, configuré de telle sorte que, lorsque la lumière est émise par une fibre optique fixée au moyen de fixation de fibre (6), pratiquement toute la zone de chauffage (13) est éclairée.

7. Dispositif de support (2) selon l'une quelconque des revendications précédentes, dans lequel le moyen de fixation de fibre (6) est disposé à l'opposé de la zone de chauffage (13), de sorte que la lumière émise par la fibre optique (4) soit dirigée directement vers la zone de chauffage (13).

8. Dispositif de support (2) selon l'une quelconque des revendications précédentes, dans lequel un élément optique, tel qu'un réflecteur (38) et/ou une lentille (39), est disposé dans la chambre intérieure (11) entre le moyen de fixation de fibre (6) et le porte-échantillon (12).

9. Dispositif de support (2) selon l'une quelconque des revendications précédentes, dans lequel le récipient (10) comprend un axe de longueur (33) et un moyen de fixation mécanique (34) pour la fixation du porte-échantillon (12), dans lequel le moyen de fixation de fibre (6) est disposé à une distance le long de l'axe de longueur (33) du porte-échantillon (12), et dans lequel le moyen de fixation mécanique (34) est disposé à moins d'une première distance (x) du porte-échantillon (12) qui n'est pas à plus de 10 %, de préférence pas à plus de 5 %, d'une seconde distance (L) depuis le porte-échantillon (12) jusqu'au moyen de fixation de fibre (6).

10. Dispositif de support (2) selon la revendication 9, dans lequel le récipient (10) comprend une surface principale (26) sur laquelle l'échantillon (1) doit être disposé, dans lequel le moyen de fixation mécanique (34) est disposé sur la surface principale (26).

11. Dispositif de support (2) selon l'une quelconque des revendications précédentes, dans lequel le réflecteur comprend une base de réflecteur (46) sur laquelle la surface réfléchissante (45) est configurée.

12. Dispositif de support (2) selon la revendication 11, dans lequel la base de réflecteur (46) est réalisée en tôle.

13. Dispositif de support (2) selon la revendication 11 ou 12, dans lequel la base de réflecteur (46) est disposée avec un espace entre la base de réflecteur (46) et le récipient (10).

14. Dispositif de support (2) selon la revendication 12 ou 13, dans lequel la base de réflecteur (46) comprend des perforations qui ont été fabriquées en retirant par pression des languettes (24) de la tôle de la base de réflecteur (46), dans lequel les languettes (24) s'étendent à partir de la base de réflecteur (19) et fournissent l'espace (47) entre la base de réflecteur (46) et le récipient (10).

15. Système de chauffage (100) pour chauffer un échantillon (1) comprenant
- un dispositif de support (2) selon l'une quelconque des revendications précédentes,
- un laser (3),
- une fibre optique (4) fixée par une extrémité (5) au moyen de fixation de fibre (6), et par l'autre extrémité (7) de la fibre optique (4) au laser (3).
